Europäisches Patentamt

European Patent Office

Office européen des brevets

(19)

(11) Publication number: **0 147 109**
**A1**

(12) **EUROPEAN PATENT APPLICATION**

(21) Application number: **84308499.7**

(22) Date of filing: **06.12.84**

(51) Int. Cl.⁴: **C 12 C 1/04**
**C 12 C 1/02**

(30) Priority: **06.12.83 ES 527821**

(43) Date of publication of application:
**03.07.85 Bulletin 85/27**

(84) Designated Contracting States:
**BE DE FR GB IT NL**

(71) Applicant: **AIR PRODUCTS AND CHEMICALS, INC.**
**P.O. Box 538**
**Allentown, Pennsylvania 18105(US)**

(72) Inventor: **Valiente, Pedro Cuadrillero**
**Socrates 80 1o 1a**
**08030 Barcelona(ES)**

(74) Representative: **Lucas, Brian Ronald**
**Lucas, George & Co. 135 Westhall Road**
**Warlingham Surrey CR3 9HJ(GB)**

(54) **Process for germinating cereal grain.**

(57) Barley is steeped in water and is then allowed to grow in beds between 50 and 150 cm thick. Oxygen is admitted to the water to maintain the disolved oxygen concentration at a predetermined level during steeping. During growth the level of oxygen is maintained between 38% and 40% (by volume). Typically, the yield is increased by 10-50% over the conventional process.

Fig.1.

EP 0 147 109 A1

## PROCESS FOR GERMINATING CEREAL GRAIN

This invention relates to a process for germinating cereal grain, more particularly but not exclusively for the purpose of obtaining fermentable musts for the manufacture of alcoholic beverages, and more specifically for the manufacture of beer.

Traditionally malt for the manufacture of beer is made by steeping barley in cold water for a period of about forty hours during which time it swells and becomes somewhat tender. The water is then drained off and the grain is spread about 60 cm thick upon a floor where it heats spontaneously and begins to grow by shooting out radicles. Germination is subsequently stopped by spreading the grain more thinly and turning it over for two days after which it is made into a heap. Lastly it is conveyed to a kiln where, by a gradual and low heat, it is rendered dry and crisp to form malt.

Apart from mechanisation this process has remained largely unchanged for centuries.

In practice a substantial number of the cereal grains fail to germinate. The object of at least preferred embodiments of the present invention is to increase the yield i.e. the number of seeds which germinate.

According to the present invention there is provided a process for germinating cereal grain which comprises the steps of steeping said grain in water, and allowing the steeped grain to grow in a bed, characterized in that

(a)      oxygen or oxygen enriched air is supplied to said water during steeping, and/or

(b)      the steeped grain is allowed to grow in an atmosphere which is enriched with oxygen.

Preferably, in step (b), said steeped grain is arranged in a bed from 50 to 150 cm thick.

Advantageously, in step (b) said atmosphere contains from 25% to 45% by volume oxygen.

Preferably, said atmosphere contains from 38% to 40% by volume oxygen.

Advantageously, in step (a), the concentration of oxygen in said water is controlled automatically.

Preferably, in step (b), the concentration of oxygen in said atmosphere is controlled automatically.

Advantageously, in step (a), the grain is agitated whilst it is being steeped in said water.

Preferably, in step (b), the grain is agitated as it grows.

For a better understanding of the invention reference will now be made, by way of example, to the accompanying drawing in which:-

Figure 1 is a schematic vertical section of a chamber for steeping the grain in the first phase of a process in accordance with the invention; and

Figure 2 is a schematic representation of the installation for the germination of the grain in the second phase of the process.

The process is more specifically described with reference to the manufacture of beer from barley grain.

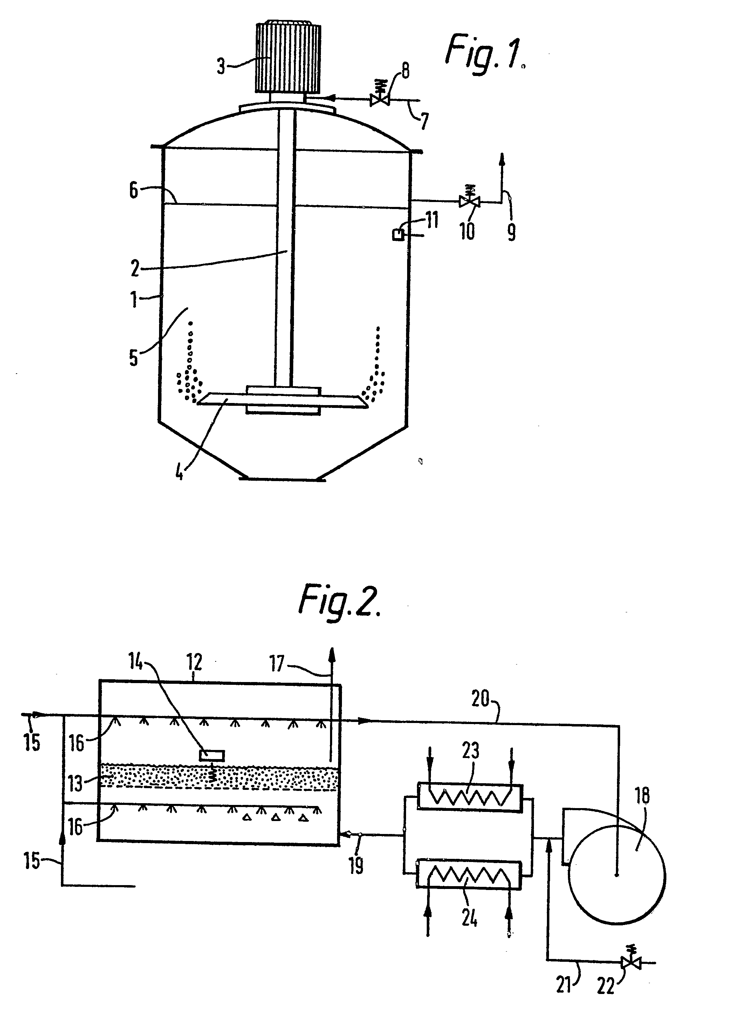

Referring to the drawing, Figure 1 shows a chamber 1 for steeping the grain. A vertical agitation shaft 2 extends into the chamber 1 and is connected to a motor 3 mounted on the upper portion of the chamber 1. The shaft carries a wheel 4 for the introduction of oxygen. Grain is placed in the chamber 1 and is covered with water 5 to level 6. Introduction of oxygen takes place via an upper conduit 7, equipped with a timed solenoid valve 8. A conduit 9 is provided for the expulsion of carbon dioxide. The conduit 9 is also provided with a timed solenoid valve 10. Submerged in the steeping water, there is a detector 11 for determining the oxygen concentration.

Automatic control of the means of agitation, oxygen impulsion, and monitoring, and of the timed solenoid valves 8 and 10 is effected from a control panel not shown in the figure.

The barley contains a considerable percentage of water, which is referred to as constitutional water, for maintaining its vital functions, which ensure the latent state to the mobile micelles of the embryo, which can not develop under dry conditions. The germination process begins when the grain absorbs more water (water of vegetation), thus expanding the feed reserves of the grain itself, part of which is water soluble and thus diffusible, and a part of which is insoluble, but made soluble by the action of enzymes.

The steeping operation is essential since, as a result of the absorption of the water, chemical and biological phenomena take place which are favorable or adverse depending on the conditions under which they are produced, and which quantitatively and qualitatively influence the germination process.

As soon as there is penetration of the amount of water required for the above-mentioned phenomena to take place, the activity of the embryo begins. It is at this moment that the grain is considered to be alive. The living grain begins its energy respiration activity and therefore consumes oxygen and gives off carbon dioxide. If no oxygen is supplied to the grain during respiration, so-called intermolecular respiration takes place, forming intermediate products such as alcohols, ethers, etc., which neutralize and kill the embryo, thereby terminating the germination.

It is impossible to give general rules regarding the amount of soaking time required for the barley to reach its level of imbibition, which is circa 38-45%, since the time required is dependent on the quality of the barley, the temperature of the water, and the concentration of oxygen. When the vital activity of the grain commences, the production of enzymes also begins, primarily diastase which dissolves the starch, thus initiating the transformations which subsequently take place with greater intensity in the germination process.

Figure 2 corresponds to the second phase of the process. There is shown a vat 12 in which the steeped grain 13 is placed in layers, the thickness of which can range between 50 and 150 cm. The grain is agitated via an apparatus 14. The grain is subjected to determined moisture and temperature conditions, and to a concentration of oxygen between 38 and 40%. Water and oxygen are supplied via conduits 15 which are fitted with spray nozzles 16 in the interior of the vat 12. A conduit 17 provides an outlet for carbon dioxide.

In order to achieve the desired concentration of oxygen, there is also a blower 18 which is connected to the vat 12 via inlet 19 and outlet 20 conduits. Oxygen is supplied through conduit 21 to the atmosphere leaving the outlet of blower 18. The amount of oxygen supplied is regulated by timed solenoid valve 22. The atmosphere is then heated and cooled by passage over heat transfer units 22, 24 as required.

This second phase, which provides the prepared malt for making the must from which the beer is obtained, is also controlled from the previously mentioned control panel.

Under favourable conditions yields are increased by 10-50% compared to normal operations.

It will be noted that the germination is carried out in an atmosphere with a content of oxygen higher than that of the free atmosphere. The oxygen concentration is determined according to a biochemical process and in accordance with the quality of the product to be obtained.

## PRACTICAL EXAMPLE

24.000 kg of barley (type 2C) was completely submerged in water in chamber 1. The grain was maintained in chamber 1 for 18 hours at 17°C during which the disolved oxygen concentration was maintained at about 15 ppm (minimum 10 ppm maximum 20ppm) by the admission of oxygen. The wheel 4 was rotated at 30 revolutions per minute.

The steeped grain was then removed from the chamber 1 and placed in vat 12 in a layer approximately 120cm thick. It was maintained at a temperature of 14°C and a humidity of approximately 100% for a period of 80 hours during which time the concentration of oxygen in the atmosphere was maintained between 38 and 40% (by volume). The yield was 99% which was approximately 10% higher than when using traditional methods.

## CLAIMS

1. A process for germinating cereal grain which comprises the steps of steeping said grain in water, and allowing the steeped grain to grow in a bed, characterized in that

(a) oxygen or oxygen enriched air is supplied to said water during steeping, and/or

(b) the steeped grain is allowed to grow in an atmosphere which is enriched with oxygen.

2. A process according to Claim 1, wherein, in step (b), said steeped grain is arranged in a bed from 50 to 150cm thick.

3. A process according to Claim 1 or 2, wherein, in step (b) said atmosphere contains from 25% to 45% by volume oxygen.

4. A process according to Claim 3 wherein said atmosphere contains from 38% to 40% by volume oxygen.

5. A process according to Claim 1, 2, 3 or 4, including, in step (a), the step of controlling the concentration of oxygen in said water automatically.

6. A process according to any preceding claim, including, in step (b), the step of controlling the concentration of oxygen in said atmosphere automatically.

7. A process according to any preceding claim, including, in step (a), the step of agitating said grain whilst it is being steeped in said water.

8. A process according to any preceding claim, including, in step (b), the step of agitating said grain.

9. A process for the germination of cereals characterized in that, in a first phase, the grain is placed for steeping into a closed chamber equipped with means for agitation and means for impulsing oxygen, which are automatically controlled and equipped with an oximeter and detector for determining the concentration of dissolved oxygen, and that, in a second phase, the grain is distributed in a vat in layers with a thickness of 500 to 1,500mm, subjected to conditions of moisture, temperature, and an oxygen concentration between 38 and 40%, with the oxygen being injected via water-spraying nozzles and ventilator blowers, all being automatically controlled.

10. A process in accordance with Claim 9, characterized in that the agitation and oxygenation of the grain in the first phase is carried out with agitation means comprised of an agitation shaft equipped with an oxygen-impulsion wheel, all of this being run by an automatically controlled motor.

Fig.1.

Fig.2.

## 0147109

European Patent
Office

**EUROPEAN SEARCH REPORT**

Application number

EP 84 30 8499

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 462 085 (L'AIR LIQUIDE)<br><br>\* The whole document \* | 1,5,9 | C 12 C 1/04<br>C 12 C 1/02 |
| Y | | 7,9,10 | |
| | --- | | |
| X | EP-A-0 030 575 (MAXWELL DAVIDSON LIMITED)<br><br>\* The whole document \* | 1-6,8,9 | |
| Y | | 7,9,10 | |
| | --- | | |
| X | FR-A-2 287 844 (KUHTREIBER F.)<br><br>\* Column 1,2,4,5,6,7,10; page 4, lines 9-25; figures \* | 1,5,7,9 | |
| | | | TECHNICAL FIELDS SEARCHED (Int. Cl.4) |
| Y | | 7,9,10 | C 12 C |
| | --- | | |
| Y | DE-C- 246 826 (R.QUITT)<br><br>\* Figures \* | 7,9,10 | |
| | --- | | |
| Y | DE-C- 472 418 (MANNHEIMER MALZ-FABRIK GmbH)<br><br>.\* Figures \* | 7,9,10 | |
| | ----- | | |

The present search report has been drawn up for all claims

| Place of search | Date of completion of the search | Examiner |
|---|---|---|
| THE HAGUE | 11-02-1985 | COUCKE A. |